# EUROPEAN PATENT APPLICATION

(11) **EP 2 221 397 A1**
(43) Date of publication of application: **25.08.2010**
(21) Application number: 10275012.2
(22) Date of filing: 05.02.2010
(51) Int. Cl.: C25B 1/04, C25B 11/04

(54) **Hydrogen-Oxygen Generating Electrode Plate And Method For Manufacturing The Same**

(30) Priority: 18.02.2009 KR 20090013342
(71) Applicant: Hwang, Boo-Sung, Kyung-ki do (KR)
(72) Inventor: Hwang, Boo-Sung, Kyung-ki do (KR)
(74) Representative: Hocking, Adrian Niall

(57) **Abstract**

The present invention relates to a hydrogen-oxygen generating electrode plate and a method for manufacturing the same. The hydrogen-oxygen generating electrode plate comprises TiO₂, Co₂O₃, Cr₂O₃, NiO, carbon nano tube, Ni or Cr and ceramic catalyst, and the TiO₂, Co₂O₃, Cr₂O₃, NiO, carbon nano tube, Ni or Cr and ceramic catalyst are pressed in the type of powder and are solidified and plasticized in a vacuum plasticizing furnace. The method for generating hydrogen-oxygen comprises a step S1 in which powder types of TiO₂, Co₂O₃, Cr₂O₃, NiO, carbon nano tube, Ni or Cr and ceramic catalyst are uniformly mixed for thereby forming a mixed compound with a high distribution degree; a step S2 in which the mixed compound is inputted into a mold and is pressed for thereby forming a solid type pressing material; and a step S3 in which the pressing material is plasticized in a vacuum plasticizing furnace.

## Description

### TECHNICAL FIELD

The present invention relates to a hydrogen-oxygen generating electrode plate and a method for manufacturing the same which can effectively generate oxygen and hydrogen from water.

### BACKGROUND ART

The apparatus for generating a mixed gas of oxygen and hydrogen is basically directed to generating hydrogen and oxygen as water is electrolyzed. Electrode plates are installed in the interior of the apparatus for generating a mixed gas of hydrogen and oxygen which is non-pollution energy source as water is electrolyzed. At this time, hydrogen and oxygen are generated at a molecule ratio of 2:1 with the help of the electrode plates, and hydrogen is generated in bubble forms from the surface of a negative electrode plate, and oxygen is generated in bubble forms from the surface of a positive electrode plate. At this time, the electrode plates used for electrolysis is made by coating platinum on the surface of a stainless steel.

The hydrogen and oxygen generated as water is electrolyzed from water becomes a mixed gas which can burn, as a result of which no pollutant are produced, so such mixed gas is considered as an environment friendly energy source.

In case of the electrode plates which are formed of stainless or stainless coated with platinum, the amount of hydrogen and oxygen is too small as compared to electric energy used, and it is needed to add sub-fuel like propane gas to hydrogen and oxygen. So, economic productivity is low.

Since the surfaces of the electrode plates slowly melt in the course of electrolysis, when hundreds of time pass, it is needed to change the electrode plates.

### DISCLOSURE OF THE INVENTION

Accordingly, it is an object of the present invention to provide a hydrogen-oxygen generating electrode plate and a method for manufacturing the same which make it possible to obtain a high productivity by increasing the production of hydrogen and oxygen as compared to electric energy source.

It is another object of the present invention to provide a hydrogen-oxygen generating electrode plate and a method for manufacturing the same which can be applied to various kinds of standards of hydrogen-oxygen generating apparatuses.

It is further another object of the present invention to provide a hydrogen-oxygen generating electrode plate and a method for manufacturing the same which do not need to exchange electrodes by preventing disengagement even when electrolysis is performed for a long time.

To achieve the above objects, in a hydrogen-oxygen generating electrode plate for generating hydrogen and oxygen by electrolysis-processing water, there is provided a hydrogen-oxygen generating electrode plate, comprising TiO₂, Co₂O₃, Cr₂O₃, NiO, carbon nano tube, Ni or Cr and ceramic catalyst, and the TiO₂, Co₂O₃, Cr₂O₃, NiO, carbon nano tube, Ni or Cr and ceramic catalyst are pressed in the type of powder and are solidified and plasticized in a vacuum plasticizing furnace.

There is further provided one selected from the group consisting of C, MoO₃, NaTaO₃-La, Si, Mn and Al₂O₃.

The ceramic catalyst is tourmaline or boehmitic.

With respect to TiO₂ 100weight%, Co₂O₃ is 10∼400weight%, Cr₂O₃ is 10∼400weight%, NiO is 10∼400weight%, carbon nano tube is 2∼40weight%, and C is 0.5∼40weight%, and MoO3 is 10∼100weight%, Ni is 10∼100weight%, NaTaO₃-La is 10∼100weight%, Si is 2∼40weight%, Mn is 5∼50weight%, Al₂O₃ is 2.5∼60weight%, Cr is 5∼50weight%, and ceramic catalyst is 2∼100weight%.

In a method for manufacturing a hydrogen-oxygen generating electrode plate for generating hydrogen and oxygen by electrolysis-processing water, there is provided a method for generating hydrogen-oxygen, comprising a step S1 in which powder types of TiO₂, Co₂O₃, Cr₂O₃, NiO, carbon nano tube, Ni or Cr and ceramic catalyst are uniformly mixed for thereby forming a mixed compound with a high distribution degree; a step S2 in which the mixed compound is inputted into a mold and is pressed for thereby forming a solid type pressing material; and a step S3 in which the pressing material is plasticized in a vacuum plasticizing furnace; wherein the Step S2 is a step in which the mixed compound is pressed under a pressure of 500∼1500ton/cm² for thereby preparing the pressing material, and wherein the Step S3 is a step in which the pressing material is plasticized in a range of 20-400 minutes at 500∼2000°C, and the plasticizing process is performed in the vacuum plasticizing furnace which is oxygen-sealed.

The step S1 further includes at least one selected from the group consisting of C, MoO₃, NaTaO₃-La, Si, Mn and Al₂O₃.

The ceramic catalyst is manufactured in such a manner that tourmaline or boehmitic is ground with a diameter of 10∼60 micrometers and is heated at 1000∼2000°C for more than one hour, and the plasticized composition is ground again with the diameter of 10∼60 nanometers sizes in powder forms.

With respect to TiO₂ 100weight%, Co₂O₃ is 10∼400weight%, Cr₂O₃ is 10∼400weight%, NiO is 10∼400weight%, carbon nano tube is 2∼40weight%, and C is 0.5∼40weight%, and MoO₃ is 10∼100weight%, Ni is 10∼100weight%, NaTaO₃-La is 10∼100weight%, Si is 2∼40weight%, Mn is 5∼50weight%, Al₂O₃ is 2.5∼60weight%, Cr is 5∼50weight%, and ceramic catalyst is 2∼100weight%.

### EFFECTS

In the hydrogen-oxygen generating electrode plates and method for manufacturing the same according to the present invention, it is possible to obtain a high economic productivity without mixing a sub-fuel such as propane gas by increasing the amount of hydrogen and oxygen gases as compared to electric power inputted.

Since the types can be determined through a pressing and plastic process, it is possible to implement in various forms depending the use and capacity.

The electrode plates manufactured according to the present invention do not need exchanges even when a few thousands of hours have passed since the surfaces of the electrode plates are not disassembled in the course of electrolysis.

### MODES FOR CARRYING OUT THE INVENTION

The hydrogen-oxygen generating electrode plate and method for manufacturing the same according to the present invention will be described with reference to the accompanying drawings.

The hydrogen-oxygen generating electrode plate according to the present invention electrolyzes water for thereby producing hydrogen and oxygen and has the following composition ratios in order to increase the amounts of hydrogen and oxygen as compared to electric power used.

The hydrogen-oxygen generating electrode plate according to the present invention is formed of TiO₂, Co₂O₃, Cr₂O₃, NiO and ceramic catalyst. At this time, the electrode plate according to the present invention further includes one selected from the group comprising CNT, C, MoO₃, Ni, NaTaO₃-La, Si, Mn, Al₂O₃ and Cr. The ceramic catalyst is preferably formed of tourmaline or boehmitic.

The hydrogen-oxygen generating electrode plates according to the present invention presses the above powder compositions under the pressure of 500∼1500ton/cm² and is plasticized at a temperature of 500∼2000°C.

The composition ratio will be described with respect t TiO₂ 100weight%.
The diameter of TiO₂ is 0.1∼100 micrometers (µm), and the composition ratio of Co₂O₃ is 10∼400weight% with respect to TiO₂ 100weight%, preferably 20∼30weight%. At this time, the diameter of Co₂O₃ is in a range of 0.1∼100 micrometers.

The composition ratio of Cr₂O₃ is 10∼400weight% with respect to SiO₂ 100weght%. At this time, the diameter of Cr₂O₃ is in a range of 0.1∼100 micrometers.

The composition ratio of NiO is 10∼400weight% with respect to TiO₂ 100weight%, preferably 20∼30weight%. At this time, the diameter of Cr₂O₃ is in a range of 0.1∼100 micrometers.

The total composition ratios of TiO₂, Co₂O₃, Cr₂O₃ and NiO are preferably 60∼80weight% with respect to 100weight% of the electrode plates of the present invention.

The composition ratio of Carbon nano tube is 2∼40weight% with respect to TiO₂ 100weight%, preferably 5∼20weight%. At this time, the diameter of carbon nano tube is in a range of 1-60 nanometers. If the composition of carbon nano tube is below 2weight%, the conductivity of the surface of the electrode plate manufactured by carbon with relatively lower conductivity is decreased, and if the composition ratio is above 40weight%, the distribution effect of carbon nano tube which has low mixing performance cannot be obtained. The density and strength of the electrode plates are weakened.

It is preferred that carbon nano tube has the diameter of 1-60 nanometers sizes for enhancing the distribution performance with respect to another composition powder, preferably 20-30 nanometers sizes. The carbon nano tube used in the present invention is selected from one from the group comprising a single wall, multiple walls and a carbon nano fiber.

The carbon nano tube is formed in a hexagonal comb pattern in relation with one carbon and another carbon in a tube shape and has a high anisotropy and has various structures such as a single wall, multiple walls, a bundle type or something and is a very small region substance in which the diameter of a tube is nanometers sizes. The carbon nano tube has an excellent electric conductivity differently from another carbon substance like diamond and a very excellent electric field emission performance. The structures of electrons of carbon are different from each other depending on the structures, namely, the carbon having an excellent electric conductivity in graphite has a sp2 banding structure, and the diamond which is an insulator has a sp3 banding structure. The carbon nano tube is formed of pores with a large surface area 1000 times as compared to bulk, the surface area can be maximized for an oxidation and reduction reaction when applying to the electric chemical apparatus, so the total reactions can be significantly increased.

The composition ratios of carbon is 0.5∼40weght% with respect to TiO₂ 100weight%, preferably 5∼20weight%. The diameter of carbon is in a range of 0.1∼100 micrometers.

The composition of carbon is generally used as a binder for binding carbon nano tube with another composition. Namely, carbon is used for binding carbon nano tube, which has very low banding performance, with other composition powders.

The composition ratio of MoO₃ is 10∼100 weight% with respect to TiO₂ 100weight%, preferably 30∼50weight%. At this time, the diameter of MoO₃ is in a range of 0.1∼100 micrometers.

The composition of nickel is 10∼100weight% with respect to TiO₂ 100weight%, preferably 15∼30weight%. At this time, the diameter of nickel is in a range of 0.1∼100 micrometers.

The composition of NaTa03-La is 10∼100weight% with respect to TiO₂ 100weight%, preferably 30∼50weight%. At this time, the diameter of NaTaO₃-La is in a range of 10∼60 nanometers. The NaTaO₃-La is used for increasing the amount of production of hydrogen from electrode plates.

The composition ratio of Si is 2∼40weight% with respect to TiO₂ 100weight%, preferably 5∼20weight%. At this time, the diameter of Si is in a range of 0.1∼ 100 micrometers.

The composition ratio of manganese is 5∼50weight% with respect to TiO₂ 100weight%, preferably 10∼20weight%. The diameter of manganese is in a range of 0.1∼ 100 micrometers.

The composition of Al₂O₃ is 2.5∼60weight% with respect to TiO₂ 100weight%, preferably 2.5∼60eight%. At this time, the diameter of Al₂O₃ is in a range of 0.1∼ 100 micrometers.

The composition ratio of Chrome is 5∼50weight% with respect to TiO₂ 100weight%, preferably 10∼20weight%. At this time, the diameter of Chrome is in a range of 0.1∼ 100 micrometers.

The composition of Ceramic catalyst is 2∼100weight% with respect to TiO₂ 100weight%, preferably 2∼100weight%. At this time, the diameter of Ceramic catalyst is in a range of 10∼60 nanometers(nm).

TiO₂, Co₂O₃, Cr₂O₃, NiO, Ceramic catalyst, carbon nano tube and carbon, MoO₃, Ni, NaTaO₃-La, Si, Mn, Al₂O₃ are prepared in powder forms. The powders of such compositions are plasticized by a pressing and in a vacuum plasticizing furnace for thereby manufacturing hydrogen-oxygen generating electrode plates.

The method for manufacturing hydrogen-oxygen generating electrode plates will be described.

In order to manufacture the hydrogen-oxygen generating electrode plate according to the present invention, powder types of TiO₂, Co₂O₃, Cr₂O₃, NiO, ceramic catalyst, etc. are uniformly mixed with a high distribution degree for thereby mixing a mixing compound in a step S1. The ceramic catalyst mixed in Step S1 is selected from the group comprising tourmaline or boehmitic and is ground with a diameter of 60-100 micrometers sizes and is heated at 1000∼2000°C for more than one hour, preferably at 1700°C for 24 hours and is plasticized. The thusly plasticized material is ground again for thereby manufacturing the powder with diameter of 10∼60 nanometers.

In the step S1 for forming mixed compound, one selected from the group comprising carbon nano tube, carbon, MoO₃, Ni, NaTaO₃-La, Si, Mn, Al₂O₃ and Cr can be further added.

The above compositions should be uniformly distributed by a known super threshold liquidity method and a reverse micelle method.

The mixed compound is inputted into the mold and is pressed under a pressure of 500∼1500ton/cm² for thereby forming a press material in Step S2. Through the pressing step, the powder type pressing material is changed to a solid type material.

At this time, a certain shaped groove can be formed in the mold for thereby obtaining various shapes of electrode plates. For example, a certain geometric configuration, for example, a mold with a plurality of grooves which are protruded or concaved at edges can be formed.

Next, a plasticizing step is performed in Step 3 at 500∼2000°C for 20-40 minutes in a vacuum plasticizing furnace. At this time, when forming a pressing material, a vacuum plasticizing furnace should be used for completely blocking the input of oxygen. If oxygen is inputted, oxidization occurs in the course of plasticizing, and the yield of hydrogen and oxygen of the electrode plate decreases.

Here, the metal such as nickel or chrome stably supports metallic oxide, non-metallic and carbon composition which belongs to electrode plates in the course of plasticization. So, the plasticization is performed at the melting points of nickel or chrome.

The above compositions are formed as a solid member through the plasticization. The ceramic catalyst promotes the electrolysis of water and at the same time prohibits the metallic substance among the above compositions from becoming a bulk shape. Namely, the metallic substances are not stuck with each other by means of ceramic catalyst in the course of plasticization at high temperature and do not become bulk size. The ceramic catalyst forms a lot of electrolyte spaces for electrolysis-performing water with the help of electrode plates for thereby generating lots of hydrogen gas and oxygen gas. Since the ceramic catalyst does not consume in the course of electrolysis, as a result, it is possible to maintain the shape of electrode plates according to the present invention. So, the service life of the electrode plates can be extended. Since the electrolysis space becomes large by ceramic catalyst, the activity of catalyst increases, and a higher chemical stability is obtained.

### <Embodiments>

Powder types of TiO₂, Co₂O₃, Cr₂O₃, NiO, ceramic catalyst, carbon nano tube, carbon, MoO₃, Ni, NaTaO₃-La, Si, Mn and Al₂O₃ are mixed by a mixer for thereby preparing a mixed compound. At this time, when preparing the mixed compound, 100g of TiO₂, 25g of Co₂O₃, 25g of Cr₂O₃, 25g of NiO, 20g of ceramic catalyst, 15g of carbon nano tube, 15g of carbon, 40g of MoO3, 25g of Ni, 40g of NaTa03-La, 20g of Si, 15g of Mn, 30g of Al₂O₃, 15g of Cr are uniformly mixed with a high distribution degree for thereby preparing a mixed compound. The mixed compound is inputted into a mold with a plate shaped groove and is pressed under a pressure of 2000ton/cm² for thereby forming a pressing material. The formed pressing material is plasticized at 890°C for 400 minutes in the vacuum plasticizing furnace for thereby manufacturing electrode plates.

Pores of nm units are formed on the surface of the electrode plates manufactured according to the embodiments of the present invention, and a plurality of fine concave and convex portions are formed. Namely, the electrode plates are equipped with pluralities of concave and convex portions for thereby increasing the surface area contacting with water. For example, when water is oxidized in concave portions while producing oxygen, hydrogen ions are concurrently produced. Hydrogen ions gather at the top of the convex portion and promote the catalyst to reduce hydrogen ions for thereby producing a lot of mixed gas of hydrogen and oxygen.

### <Comparison example>

The electrode plates are made of stainless for electrolysis-processing water, and the compared data are shown in Table below.

| Items | Embodiments | Comparison example(stainless steel) |
|---|---|---|
| Electrode plate(LxWxT) | 15cmx15cmx1cm | 15cmx15cmx1cm |
| Power consumed(W) | 300W | 23,000W |
| Total generated amount of hydrogen and oxygen per hour(L) | 62,000L/Hour | 6000L/Hour |

As seen in the above Table, the electrode plates manufactured according to the embodiments of the present invention produce much more hydrogen and oxygen for the inputted power as compared to the electrode plates used in the comparison examples.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In a hydrogen-oxygen generating electrode plate for generating hydrogen and oxygen by electrolysis-processing water, a hydrogen-oxygen generating electrode plate, comprising:
TiO₂, Co₂O₃, Cr₂O₃, NiO, carbon nano tube, Ni or Cr and ceramic catalyst, and said TiO₂, Co₂O₃, Cr₂O₃, NiO, carbon nano tube, Ni or Cr and ceramic catalyst are pressed in the type of powder and are solidified and plasticized in a vacuum plasticizing furnace.

2. The plates of claim 1, further comprising one selected from the group consisting of C, MoO₃, NaTaO₃-La, Si, Mn and Al₂O₃.

3. The plates of claim 1, wherein said ceramic catalyst is tourmaline or boehmitic.

4. The plates of one of claims 1 to 3, wherein with respect to TiO₂ 100weight%, Co₂O₃ is 10∼400weight%, Cr₂O₃ is 10∼400weight%, NiO is 10∼400weight%, carbon nano tube is 2∼40weight%, and C is 0.5∼40weight%, and MoO₃ is 10∼100weight%, Ni is 10∼100weight%, NaTaO₃-La is 10∼100weight%, Si is 2∼40weight%, Mn is 5∼50weight%, Al₂O₃ is 2.5∼60weight%, Cr is 5∼50weight%, and ceramic catalyst is 2∼100weight%.

5. In a method for manufacturing a hydrogen-oxygen generating electrode plate for generating hydrogen and oxygen by electrolysis-processing water, a method for generating hydrogen-oxygen, comprising:
a step S1 in which powder types of TiO₂, Co₂O₃, Cr₂O₃, NiO, carbon nano tube, Ni or Cr and ceramic catalyst are uniformly mixed for thereby forming a mixed compound with a high distribution degree;
a step S2 in which the mixed compound is inputted into a mold and is pressed for thereby forming a solid type pressing material; and
a step S3 in which the pressing material is plasticized in a vacuum plasticizing furnace;
wherein said Step S2 is a step in which the mixed compound is pressed under a pressure of 500∼1500ton/cm² for thereby preparing the pressing material, and wherein said Step S3 is a step in which the pressing material is plasticized in a range of 20-400 minutes at 500∼2000°C, and said plasticizing process is performed in the vacuum plasticizing furnace which is oxygen-sealed.

6. The method of claim 5, wherein said step S1 further includes at least one selected from the group consisting of C, MoO₃, NaTaO₃-La, Si, Mn and Al₂O₃.

7. The method of claim 5, wherein said ceramic catalyst is manufactured in such a manner that tourmaline or boehmitic is ground with a diameter of 10∼60 micro sizes and is heated at 1000∼2000°C for more than one hour, and the plasticized composition is ground again with the diameter of 10∼60 nanometers sizes in powder forms.

8. The method of one among claims 5, 6 and 10, wherein with respect to TiO₂ 100weight%, Co₂O₃ is 10∼400weight%, Cr₂O₃ is 10∼400weight%, NiO is 10∼400weight%, carbon nano tube is 2∼40weight%, and C is 0.5∼40weight%, and MoO₃ is 10∼100weight%, Ni is 10∼100weight%, NaTaO₃-La is 10∼100weight%, Si is 2∼40weight%, Mn is 5∼50weight%, Al₂O₃ is 2.5∼60weight%, Cr is 5∼50weight%, and ceramic catalyst is 2∼100weight%.
